Europäisches Patentamt

European Patent Office

Office européen des brevets

(11) Publication number: **0 400 493**
**A1**

## (12) EUROPEAN PATENT APPLICATION

(21) Application number: **90109946.5**

(22) Date of filing: **25.05.90**

(51) Int. Cl.⁵: **B60N 3/00, A62B 7/02**

(30) Priority: **31.05.89 IT 2116989**

(43) Date of publication of application:
**05.12.90 Bulletin 90/49**

(84) Designated Contracting States:
**AT BE CH DE DK ES FR GB GR IT LI LU NL SE**

(71) Applicant: **Mentasti Granelli, Bruno**
**Via Castelvetro, 17/23**
**I-20154 Milano(IT)**

(72) Inventor: **Mentasti Granelli, Bruno**
**Via Castelvetro, 17/23**
**I-20154 Milano(IT)**

(74) Representative: **Vannini, Torquato et al**
**JACOBACCI-CASETTA & PERANI S.p.A. 7 Via**
**Visconti di Modrone**
**I-20122 Milan(IT)**

(54) **A car accessory for fighting incipient fits of driver's drowsiness.**

(57) A container (1) is disclosed which is provided with a dispenser (3) and is filled with a pressurized fluid including oxygen, the container (1) being configured to constitute a car accessory for manual operation.

FIG.2

This invention relates to a car accessory particularly, but not exclusively, intended for effectively fighting incipient fits of driver's drowsiness.

Fits of driver's drowsiness are recognized to be among the worst dangers incurred by a driver of a motorvehicle, and the languid state that precedes it, irrespective of the cause, is sure sign of its inception as well as a natural forewarning thereof.

Contrary to what cautiousness should teach or at least suggest, not infrequent is the case of a motorvehicle driver denying him/herself a resting spell, however short this may have to be, on first sign of drowsiness and, overconfident of his/her ability to successfully fight drowsiness, or under some other urges, carrying on, possibly by relying on some more or less well-proven tricks of his/her own devising.

In an effort to prevents the effects of a fit of such drowsiness, a number of alarm devices have been proposed which are based in general on an ability to feel or sense the position of the driver's head, for example, and to become operative upon departure from that normal position.

While being for some aspects useful and beneficial, devices of the above-mentioned type have gained limited acceptance both because somewhat bulky and because they tend to induce a feeling of vexation in their user, to the point that they soon become intolerable.

More drawbacks originate, moreover, from their non-negligible manufacturing and installation costs, and above all, from their unsatisfactory performance and reliability.

It is a primary object of this invention to provide a car accessory which can successfully fight incipient fits of driver's drowsiness and has such performance and effectiveness features as to overcome the drawbacks with which the above-noted prior devices are beset.

This and other objects to become apparent hereinafter are achieved by a car accessory for fighting incipient fits of driver's drowsiness, characterized in that it comprises a container of pressurized fluids provided with a dispenser having a manually operated valve means, and that said container is filled with oxygen under a selected pressure.

Advantageously, and in accord with a feature of this invention, said pressurized fluid container is filled with oxygen-enriched air.

The features and advantages of the invention will become apparent from the following detailed description of an exemplary embodiment of this car accessory, given herein below with reference to the accompanying illustrative and non-limitative drawings, where:

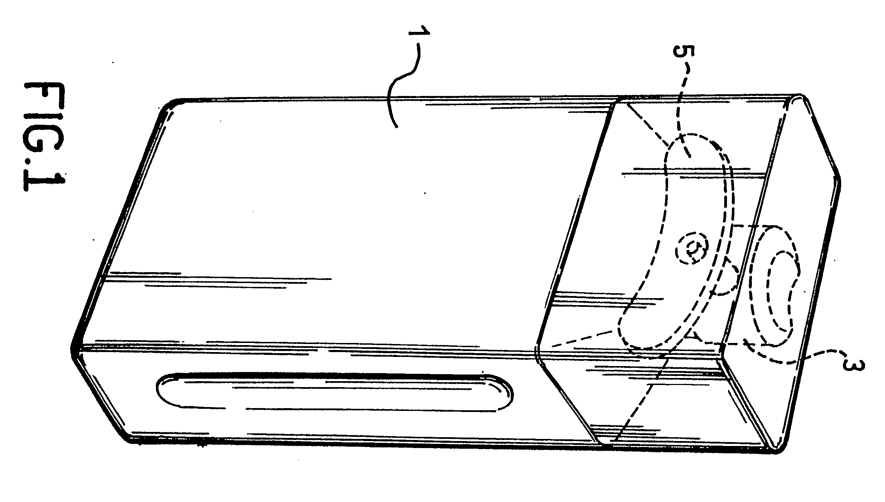

Figure 1 shows, in perspective and elevation, a car accessory according to the invention; and

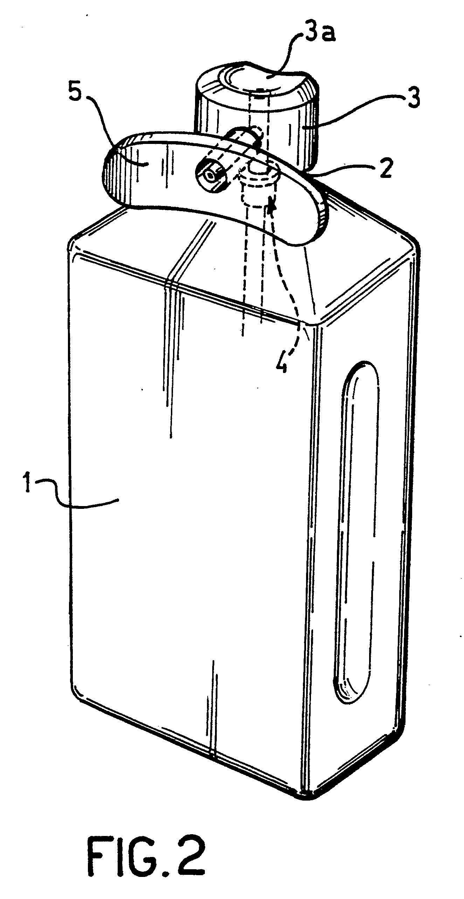

Figure 2 is a perspective view of the car accessory shown in Figure 1, in operation thereof.

With reference to the drawing views, a car accessory according to the invention comprises a container 1 constructed for filling with a pressurized fluid and having a mouth 2 including a conventional dispenser 3 equipped with a manually operated valve means 4.

In particular, said dispenser 3 is of the cap-like type fitting slidably and being guided over the neck 2a of the mouth 2 and provided with a contoured portion 3a to facilitate operation with a finger.

Advantageously, associated with the dispenser 3 is a conventional mouthpiece 5 formed from a soft non-toxic material.

The container 1 would be filled with a breathable gaseous mixture, preferably and advantageously oxygen-enriched air. The pressure under which said gaseous mixture is loaded would be selected to suit its utilization requirements, particularly the requirements of individual users.

In a preferred, but not restrictive embodiment, the container 1 is provided in the form of a flattened bottle, so as to fit advantageously to the interior walls of a vehicle driver compartment, particularly within drawers, bins, receptacles as are usually provided in said compartment.

Other shapes, such as those of a cylindrical or spherical bottles are also viable for the purposes of this invention.

The use of the above-described car accessory is self-evident and quite convenient. As the driver of a motorvehicle realizes that he/she is entering a languid state, he/she will be able to shake him/herself off that state, for a period of time which may be signifcantly long, by drawing from the gaseous contents of the inventive accessory in appropriate amounts.

As may be appreciated, a number of changes and modifications may be made to the construction and functionality of the car accessory according to the invention without departing from the broad scope thereof as set forth in the appended claims.

## Claims

1. A car accessoryfor fighting incipient fits of driver's drowsiness, characterized in that it comprises a container (1) of pressurized fluids provided with a dispenser (3) having a manually operated valve means (4), and that said container (1) is filled with oxygen under a selected pressure.

2. A car accessory according to Claim 1, characterized in that said container (1) is filled with oxygen-enriched air.

3. A car accessory according to Claim 1, characterized in that said container (1) is essentially in the form of a flattened bottle having a neck (2a) wherewith said dispenser (3) is associated.

4. A car accessory according to Claim 3, characterized in that said dispenser (3) is in the form of a cap-like dispenser guided slidably over said neck (2a) of the container (1) and has a portion (3a) contoured to facilitate operation with a finger.

5. A car accessory according to any of the preceding claims, characterized in that it further comprises a mouthpiece (5) associated with said dispenser (3).

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-2728393 (PEROVIC)<br>* page 1, line 1 - page 1, line 8; figure a *<br>* page 10, line 9 - page 10, line 23 *<br>--- | 1 | B60N3/00<br>A62B7/02 |
| A | EP-A-198708 (NIPPON)<br>* page 10, line 1 - page 10, line 18; figure a *<br>--- | 1, 4, 5 | |
| A | US-A-2860634 (DUNCAN)<br>* column 4, line 10 - column 4, line 32; figure a *<br>--- | 1, 4, 5 | |
| A | US-A-3739950 (GORMAN)<br>* column 3, line 21 - column 4, line 46; figure a *<br>--- | 1, 3, 4, 5 | |
| A | US-A-3998226 (HARRIS)<br>* column 2, line 41 - column 3, line 24; figure a *<br>--- | 1, 4, 5 | |
| A | US-A-3776227 (PITESKY)<br>* column 1, line 56 - column 2, line 39; figure a *<br>--- | 1, 4, 5 | TECHNICAL FIELDS SEARCHED (Int. Cl.5 ) |
| A | US-A-3259050 (GRIMM)<br>* column 1, line 10 - column 1, line 21; figure a *<br>* column 4, line 35 - column 4, line 47 *<br>----- | 1 | A62B<br>A61M<br>B60N<br>B60H |

The present search report has been drawn up for all claims

| Place of search | Date of completion of the search | Examiner |
|---|---|---|
| THE HAGUE | 21 AUGUST 1990 | HORVATH R. |